# EUROPÄISCHE PATENTSCHRIFT

(11) **EP 0 705 680 B1**
(45) Veröffentlichungstag und Bekanntmachung des Hinweises auf die Patenterteilung: **10.02.1999**
(21) Anmeldenummer: 95115528.2
(22) Anmeldetag: 02.10.1995
(51) Int. Cl.: B29C 53/04, B29B 13/02, C08J 3/18, C08J 3/24

(54) **Verfahren zum Heissverformen einer Kunststoff-Schicht-pressstoffplatte**
Process for hotforming a plastic laminate sheet
Procédé pour déformer à chaud une plaque stratifiée en matière plastique

(30) Priorität: 07.10.1994 DE 4435957
(43) Veröffentlichungstag der Anmeldung: 10.04.1996
(73) Patentinhaber: Trespa International B.V., 6002 SM Weert (NL)
(72) Erfinder: Lustig, Hans, Dipl.-Ing., NL-5611 SR Eindhoven (NL); Kömhoff, Henricus H. M., NL-6039 DE Stramproy (NL)
(74) Vertreter: Zounek, Nikolai, Dipl.-Ing.

(56) Entgegenhaltungen:
- EP-A- 0 045 883
- EP-A- 0 262 244
- EP-A- 0 365 054
- DE-A- 3 715 120
- US-A- 1 872 482
- PLASTVERARBEITER, Bd. 30, Nr. 1, 1979 Seiten 11-14, GEORG MAGER 'VARIATIONSMÖGLICHKEITEN BEIM ABKANTEN UND ÖRTLICHEN BIEGEN VON THERMOPLASTISCHEM PLATTENMATERIAL'

## Beschreibung

Die Erfindung betrifft ein Verfahren zum Heißverformen einer Kunststoff-Schichtpreßstoffplatte, die einen aus einer Faserschicht oder aus mehreren miteinander heiß verpreßten, mit Harz imprägnierten Faserschichten geformten Kern aufweist, der beidseitig mit einer dekorativen Harz-Deckschicht beschichtet ist, bei dem die Platte durch Erwärmen in einem Verformungsbereich auf die Verformungstemperatur gebracht und in dem Verformungsbereich um eine Form gebogen und anschließend abgekühlt wird.

Bei solchen heiß verformten Kunststoff-Schichtpreßstoffplatten handelt es sich um sogenannte Kompaktformteile, deren Aufbau entweder dem von HPL(high pressure laminate)-Kompaktplatten nach EN 438 bzw. DIN 16 926 bzw. ISO 4586 entspricht oder einem derartigen Aufbau ähnlich ist. Die Komponenten derartiger Kompaktplatten werden aus den gleichen Materialien in den gleichen Hochdruckpressen hergestellt wie alle HPL-Kompaktplatten und können je nach Formungsverfahren fallweise Klebeschichten enthalten. Kompaktformteile sind selbsttragende Elemente mit stabilen Rundungen und haben wie Kompaktplatten ein- bzw. beidseitige dekorative Farbgebung mit glatter oder strukturierter Oberfläche und weisen im allgemeinen geschlossene Schnittkanten auf.

Ein Verfahren der eingangs beschriebenen Art ist aus der DE-B-28 23 669 bekannt, bei dem das Erwärmen der Platte in einem solchen Ausmaß vorgenommen wird, daß die Trägerlagen oder die Lagengruppen, die aus mehreren miteinander verbundenen Trägerlagen bestehen, die mittels eines thermoplastischen Bindemittels miteinander verbunden sind, sich beim Verformen im erwärmten Verformungsbereich in Richtung der Plattenoberfläche gegeneinander verschieben und daß während und nach dem Verformen oder allein nach dem Verformen jeweils zumindest bis zum Wiedererstarren des Bindemittels infolge Abkühlung ein Auftrennen der Bindemittelfugen durch Formhalteorgane der Biegeeinrichtung verhindert wird.

Es sind auch Verfahren bekannt, bei denen melaminbeharzte Dekor- und phenolbeharzte Kernpapierbahnen in S-förmigen oder L-förmigen Formen definierter Abmessung unter Hitze und hohem Druck gehärtet werden. Bei einem anderen bekannten Verfahren wird in den Bereichen der vorzunehmenden Biegung durch Einlegen von Trennstreifen bei der Herstellung die Dicke der Kompaktplatten einseitig begrenzt, wobei sich die Dicke nach dem gewünschten Biegeradius richtet. In den dünneren Plattenbereichen ist eine nachträgliche Formung in stationären Biegeanlagen unter Wärme möglich. Nach Abkühlung in einer Spannvorrichtung bleiben die Teile geformt, wobei die mechanische Festigkeit der Rundungsbereiche durch die verbleibende Wandstärke bestimmt ist. Bei einem weiteren bekannten Verfahren wird die Kompaktplatte in den zu verformenden Bereichen einseitig bis auf eine geringe Wandstärke ausgefräst, die vom gewünschten Biegeradius abhängt und in stationären Biegeanlagen unter Wärme geformt. Die ausgefrästen Hohlräume werden noch in der Spannvorrichtung mit härtenden Kunstharzen ausgegossen oder durch Einsetzen von Paßstücken verfestigt.

Die Herstellung von Formteilen aus Kompaktplatten und einer nachträglich aufgeklebten HPL-Kompaktplatte geschieht bei einem weiteren bekannten Verfahren in der Weise, daß die Kompaktplatte vor der Klebung an den später zu formenden Stellen angefräst oder mit einer Distanzleiste ausgefüllt wird. Eine weitere Möglichkeit besteht darin, zwei Kompaktplatten als Träger im vorgesehenen Winkel zusammenzufügen und eine der Kanten zu einer konvexen Rundung abzufräsen. Auf diese abgefräste Fläche wird dann die HPL-Kompaktplatte geklebt. Durch rückseitiges Ausfräsen bzw. Entfernen der Distanzleiste können konkave Rundungen hergestellt werden.

Bei der Herstellung von kompakten Formteilen aus HPL-Einzellagen werden diese Einzellagen in Dicken bis zu 1 mm mit beidseits geschliffenen Kernplatten zu Plattenpaketen gewünschter Dicke geschichtet und dann in Spannformen mit beispielsweise lösungsmittelfreien Zweikomponenten-Klebstoffen zusammengeklebt. Die fugendichte Klebung der nicht-saugenden HPL-Einzellagen stellt hohe Anforderungen an die Zweikomponenten-Klebstoffe. Die geschichteten Plattenpakete werden anschließend in einer Biegevorrichtung in gewünschter Weise gerundet.

Die bekannten Verfahren, bei denen das Material im Verformungsbereich ausgefräst wird und die Hohlräume in dem Material in der Spannvorrichtung mit Kunstharzgießmasse ausgegossen oder durch Einsetzen von Paßstücken verfestigt werden, sind wegen der großen Anzahl der Verarbeitungsschritte wie Ausfräsen, Biegen, Ausgießen bzw. Anfertigen von Paßstücken, Nachbearbeitung aufwendig und die Produktqualität läßt zu wünschen übrig, da beispielsweise zylindrische Formen oft unregelmäßig geformt sind, an den Elementenden vielfältige Haarrisse auftreten und das Material nur als einseitig dekoratives Element einsetzbar ist.

Bei der Verformung in einer Formpresse ist die Produktqualität gut, jedoch sind die Matrizen für die Formpresse sehr teuer und wegen ihrer mangelnden Flexibilität nicht einsetzbar für verschiedene Formen.

Die Verformbarkeit von nicht-ausgehärteten, zu einer Platte zusammengeschichteten Lagen aus HPL-Kompaktplatten, wobei die Aussenseiten einer solchen Platte mit einem Melamin- oder Acrylharz-Deckschichten ausgerüstet sind, wird durch die geringe Dehnbarkeit der Deckschichten begrenzt.

Aufgabe der Erfindung ist es, ein Verfahren der eingangs beschriebenen Art so weiterzuentwickeln und zu verbessern, daß die Verformbarkeit einer HPL-Kompaktplatte oder einer vergleichbaren Platte, unter Vermeidung des Auftretens von Rissen, Sprüngen und dergleichen Mängel in den dekorativen Deckschichten während der Verformung, erhöht wird.

Diese Aufgabe wird erfindungsgemäß in der Weise gelöst, daß die Platte während des Heißpressens des Kerns nicht voll ausgehärtet wird, daß die beiden Seiten der Platte unterschiedlich stark erwärmt werden, daß eine maximale Verformung über einen Bereich der 12- bis 25-fachen Plattenstärke möglich ist und daß die verformte Platte in Kombination mit einem Weichmacher nachgehärtet wird.

Im Rahmen dieses Verfahrens liegt das Verhältnis der Temperaturen an den beiden Seiten der Platte während des Erwärmens im Bereich von 2,5 bis 9,5. Dabei wird in Ausführung des Verfahrens die eine Seite der Platte auf eine Temperatur von 150 °C bis 190 °C und die andere Seite der Platte auf eine Temperatur zwischen 20 °C und 60 °C erwärmt. Im einzelnen wird die Platte in Abhängigkeit von ihrer Dicke von 3 bis 20 mm über eine Zeitspanne von 1 bis 10 Minuten, vorzugsweise 1 bis 5 Minuten, erwärmt.

Die weitere Ausgestaltung des erfindungsgemäßen Verfahrens ergibt sich aus den Merkmalen der Patentansprüche 5 bis 10.

Mit dem im erfindungsgemäßen Verfahren werden die Vorteile erzielt, daß die Produktqualität hoch ist, daß Platten bis zu einer Plattendicke von 20 mm ohne Qualitätsverlust verformtwerden können, daß auf eine mechanische Verarbeitung wie beispielsweise ein Aus- bzw. Abfräsen von Materialbereichen verzichtet werden kann, und daß nur wenige Arbeitsschritte erforderlich sind. Darüber hinaus ist es möglich, mit hoher Flexibilität verschiedene Formen mit billigen Matrizen herzustellen.

Das erfindungsgemäße Verfahren wird im folgenden anhand von schematisch dargestellten Arbeitsschritten näher erläutert. Es zeigen:
- Figur 1: schematisch das Erwärmen der beiden Oberflächen einer gepreßten Platte auf unterschiedliche Temperaturen,
- Figur 1A: im vergrößerten Maßstab einen Ausschnitt einer unverpreßten Platte,
- Figur 2: den Verformungsvorgang der erwärmten Platte, und
- Figur 3: das Nachhärten der Platte in einem Tauchbad.

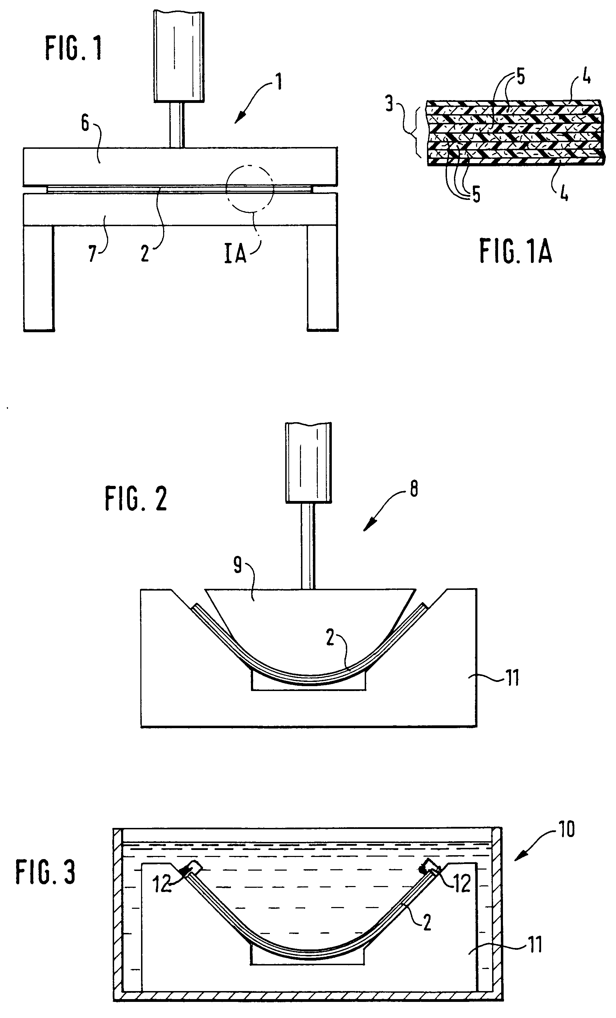

Eine in Figur 1 gezeigte Kunststoff-Schichtpreßstoffplatte 2 besteht aus einem Kern 3 und Harz-Deckschichten 4, die beidseitig auf den Kern 3 auflaminiert sind. In Figur 1A ist im vergrößerten Maßstab ein Ausschnitt einer unverpreßten Platte dargestellt. Den Kern 3 bildet ein Paket von mit Harz imprägnierten Faserschichten 5, die miteinander heiß verpreßt sind, sogenannte HPL-Kompaktplatten, oder Platten, wie sie in der EP-A 0 081 147 beschrieben sind. Das Material der Faserschicht sind beispielsweise jeweils mit Phenolharz getränkte Cellulose-bzw. Holzfasern oder Papierbahnen. Bei den Harz-Deckschichten 4 handelt es sich um mit Melamin beharzte Dekorpapiere oder pigmentierte Acrylharzsysteme gemäß der EP-A 0 166 153, die im allgemeinen gegen Dehnungen empfindlich sind und bei Verformungen zu Rissen, Sprüngen und dergleichen neigen. Wie aus Figur 1 ersichtlich ist, ist die flache Kunststoff-Schichtpreßstoffplatte 2 in einer flachen Hochdruckpresse 1 eingelegt, mittels der ein Preßdruck im Bereich von 6x10² bis 9x10² N/cm² (60 bis 90 bar) bei einer Maximaltemperatur im Bereich von 145 °C bis 160 °C ausgeübt wird. Während des Preßvorgangs und danach werden die miteinander heißverpreßten, mit Phenolharz imprägnierten Faserschichten nicht vollständig ausgehärtet, wodurch es ermöglicht wird, die Kunststoff-Schichtpreßstoffplatte 2 bei einem nachfolgenden Erwärmungsschritt zu verformen.

Nach Beendigung des Preßvorgangs erfolgt in einem zweiten Schritt des Verfahrens eine asymmetrische Erwärmung der Platte 2 zwischen einer oberen Heizplatte 6, die auf eine Temperatur im Bereich von ungefähr 150 °C bis 190 °C erwärmt wird und einer unteren Heizplatte 7, die eine Temperatur im Bereich von 20 °C bis 60 °C aufweist. Die Erwärmzeiten betragen 1 bis 10 Minuten in Abhängigkeit von der Dicke der Platte 2. Diejenige Seite der Platte 2 wird stärker erwärmt, die nach der Verformung die Innenseite einer Rundung bildet. Nach dem Erwärmen der Platte 2 durch ein asymmetrisches Wärmefeld gelangt die Platte 2 in eine in Figur 2 schematisch dargestellte Biegevorrichtung 8. Das Verhältnis der Temperaturen während des Erwärmens an den beiden Seiten der Platte 2 liegt im allgemeinen in einem Bereich von 2,5 bis 9,5. Nach dem Verfahren können Platten mit einer Dicke von 3 bis 20 mm verformt werden, wobei die Erwärmzeit von 1 bis 10 Minuten sich nach der Dicke der Platte 2 richtet. Die Biegevorrichtung 8 umfaßt einen Stempel 9 mit halbzylindrischem Querschnitt, jedoch kann der Querschnitt auch parabolische, elliptische und eine sonstige gekrümmte, bogenförmige Gestalt aufweisen und eine entsprechend angepaßte Hohlform 11. Die Druckkraft, die der Stempel 9 aufbringen muß, ist üblicherweise ≤10⁴ N/m. Der Verformungsbereich erstreckt sich über einen Bereich ab der 12- bis 25-fachen Plattenstärke und hängt von der Zusammensetzung der Harz-Deckschichten und des Kernmaterials ab. Während der Verformung wird die außenliegende Deckschicht unter Spannung gesetzt, während die innenliegende Deckschicht gestaucht wird. Durch den asymmetrischen Temperaturaufbau in der Platte 2, bei der die höchste Temperatur an der Innenseite, die unmittelbar an dem Stempel 9 anliegt, vorherrscht, werden die nicht völlig ausgehärteten Kernschichten an der Innenseite, die durch die höhere Temperatur eine niedrigere Streckgrenze haben, durch Stauchung bzw. Kompression der Innenseite plastisch verformt. Die Stauchung überwiegt eine Überdehnung der Außenseite der Platte 2, deren Deckschicht und außenliegendes Material der Faserschichten wegen der niedrigen Erwärmtemperatur eine höhere Streckgrenze haben, wobei sich die Materialsteifheit der Platte reziprok zu der Temperatur des Materials verhält. Die begrenzte Überdehnung der Außenseite verhindert ein Brechen der Deckschicht während der Verformung. Da die verformte Platte weitgehend nicht ausgehärtet ist und in ihr innere Spannungen auftreten, muß sie in der Biegevorrichtung 8 fixiert bleiben, um zu verhindern, daß sie sich bei zu frühzeitigem Herausnehmen aus der Biegevorrichtung in ihre ursprüngliche flache Gestalt ausbreitet. Die Verformung geschieht im allgemeinen über eine Zeitspanne von weniger als 30 Sekunden.

Zum Abbau der Innenspannung und zur Verbesserung der mechanischen Materialeigenschaften der verformten Platte 2 erfolgt in einem in Figur 3 schematisch gezeigten Tauchbad 10 eine Nachhärtung, wobei die verformte Platte auch im Tauchbad 10 in der Matrize mittels Klemmblöcken 12 fixiert bleiben muß. Hierzu besteht das Tauchbad 10 aus einem Weichmachermittel aus der Gruppe der monomeren und oligomeren Glykole, besonders geeignet ist Diethylenglykol, dessen Temperatur in dem Tauchbad 120 °C bis 160 °C beträgt. Die Nachhärtung in dem Tauchbad 10 ermöglicht es erst, große Verformungen der Platte 2 durchzuführen, wobei während des Nachhärtens die Bruchbelastbarkeit der Harz-Deckschichten erhöht wird. Diethylenglykol wird bevorzugt, da es hohe Stabilität und sehr geringe Toxizität bei den angewandten Temperaturen des Tauchbades 10 zeigt. Ebenso ist es möglich, die Platte 2 zum Nachhärten einer dampfgesättigten Diethylenglykol-Atmosphäre auszusetzen. Die Nachhärtungszeit beträgt im allgemeinen 10 bis 45 Minuten, insbesondere 30 Minuten bei einer Temperatur von 130 °C des Diethylenglykol-Tauchbades.

Die Anwendung von Hitze allein in Kombination mit einer Luft- und Dampfumgebung kann im allgemeinen nicht das Auftreten von Rissen in der gestreckten außenliegenden Deckschicht der verformten Platte verhindern. Insbesondere im Falle von großen Verformungen, die im Bereich der 12- bis 25-fachen Plattendicke liegen, treten Risse im wesentlichen auf. Erst durch das erfindungsgemäße Verfahren mit dem Anlegen eines asymmetrischen Wärmefeldes an die Platte 2 und der anschließenden Nachhärtung in einem Weichmachermittel bzw. Plastifiziermittel ermöglicht es, große Verformungen auszuführen, ohne daß es zu Rissen in den Deckschichten der Platte kommt.

## Patentansprüche

1. Verfahren zum Heißverformen einer Kunststoff-Schichtpreßstoffplatte, die einen aus einer Faserschicht oder aus mehreren miteinander heiß verpreßten, mit Harz imprägnierten Faserschichten geformten Kern aufweist, der beidseitig mit einer dekorativen Harz-Deckschicht beschichtet ist, bei dem die Platte durch Erwärmen in einem Verformungsbereich auf die Verformungstemperatur gebracht und in dem Verformungsbereich um eine Form gebogen und anschließend abgekühlt wird, dadurch gekennzeichent, daß die Platte während des Heißpressens des Kerns nicht voll ausgehärtet wird, daß die beiden Seiten der Platte unterschiedlich stark erwärmt werden, daß eine maximale Verformung über einen Bereich der 12- bis 25-fachen Plattenstärke möglich ist und daß die verformte Platte in Kombination mit einem Weichmacher nachgehärtet wird.

2. Verfahren nach Anspruch 1, dadurch gekennzeichnet, daß das Verhältnis der Temperaturen an den beiden Seiten der Platte während des Erwärmens im Bereich von 2,5 bis 9,5 liegt.

3. Verfahren nach Anspruch 1, dadurch gekennzeichnet, daß die eine Seite der Platte auf eine Temperatur von 150 °C bis 190 °C und die andere Seite der Platte auf eine Temperatur zwischen 20 °C und 60 °C erwärmt wird.

4. Verfahren nach Anspruch 3, dadurch gekennzeichent, daß die Platte in Abhängigkeit von ihrer Dicke von 3 bis 20 mm über eine Zeitspanne von 1 bis 10 Minuten erwärmt wird.

5. Verfahren nach Anspruch 3, dadurch gekennzeichnet, daß die Seite der Platte stärker erwärmt wird, die den gekrümmten inneren Verformungsbereich bildet.

6. Verfahren nach Anspruch 1, dadurch gekennzeichnet, daß die Platte in Kombination mit einem Weichmacher aus der Gruppe der monomeren und oligomeren Glykole nachgehärtet wird.

7. Verfahren nach Anspruch 6, dadurch gekennzeichnet, daß mit Diethylenglykol bei einer Temperatur von 120 °C bis 160 °C nachgehärtet wird.

8. Verfahren nach Anspruch 7, dadurch gekennzeichnet, daß die Platte zum Nachhärten in ein Bad aus Diethylenglykol eingetaucht wird.

9. Verfahren nach Anspruch 7, dadurch gekennzeichnet, daß die Platte zum Nachhärten einer dampfgesättigten Diethylenglykolatmosphäre während einer Zeit von 10 bis 45 Minuten ausgesetzt wird.

10. Verfahren nach Anspruch 1, dadurch gekennzeichnet, daß die Platte nach erfolgter Verformung in der Form während der Nachhärtung fixiert wird.

## Claims

1. A process for hot-forming a plastic laminate sheet having a core which has been formed from a fibrous layer or from a number of resin-impregnated fibrous layers hot-laminated to one another and to both sides of which a decorative resin layer has been applied, in which an area to be shaped of the sheet is heated to the shaping temperature and bent around a mould and then cooled, which comprises not curing the sheet fully during the hot press molding of the core, using different strengths of heating for the two sides of the sheet, maximum shaping being possible over an area of from 12 to 25 times the sheet thickness, and post-curing the shaped sheet in combination with a plasticizer.

2. The process as claimed in claim 1, wherein the ratio of the temperatures on the two sides of the sheet during the heating procedure is in the range from 2.5 to 9.5.

3. The process as claimed in claim 1, wherein one side of the sheet is heated to a temperature of from 150 to 190°C and the other side of the sheet to a temperature of from 20 to 60°C.

4. The process as claimed in claim 3, wherein, depending on the thickness of the sheet from 3 to 20 mm, it is heated for a period of from 1 to 10 minutes.

5. The process as claimed in claim 3, wherein the side of the sheet heated more strongly is that which forms the curved inner area of the shaping.

6. The process as claimed in claim 1, wherein the sheet is post-cured in combination with a plasticiser selected from the class of monomeric and oligomeric glycols.

7. The process as claimed in claim 6, wherein the post-curing takes place with diethylene glycol at a temperature of from 120 to 160°C.

8. The process as claimed in claim 7, wherein, for post-curing, the sheet is immersed into a bath of diethylene glycol.

9. The process as claimed in claim 7, wherein, for post-curing, the sheet is exposed to a vapor-saturated diethylene glycol atmosphere for a time of from 10 to 45 minutes.

10. The process as claimed in claim 1, wherein, after the shaping procedure is complete, the sheet is fixed in the mold during the post-curing procedure.

## Revendications

1. Procédé de déformation à chaud d'une plaque stratifiée de matière plastique qui présente un noyau formé d'une couche fibreuse ou de plusieurs couches fibreuses imprégnées de résine et comprimées l'une avec l'autre, ledit noyau étant revêtu sur les deux faces d'une couche de couverture décorative de résine, procédé dans lequel la plaque est amenée, par chauffage dans une zone de déformation, à la température de déformation et est cintrée dans la zone de déformation autour d'un gabarit et est ensuite refroidie, caractérisé en ce que la plaque n'est pas complètement durcie au cours de la compression à chaud du noyau, les deux faces de la plaque sont chauffées avec une intensité différente, une déformation maximale est possible sur une plage de 12 à 25 fois l'épaisseur de la plaque et la plaque déformée est post-durcie en combinaison avec un plastifiant.

2. Procédé selon la revendication 1, caractérisé en ce que le rapport des températures sur les deux faces de la plaque au cours du chauffage se situe dans la plage de 2,5 à 9,5.

3. Procédé selon la revendication 1, caractérisé en ce que la première face de la plaque est chauffée à une température de 150 à 190°C et l'autre face de la plaque à une température entre 20 et 60°C.

4. Procédé selon la revendication 3, caractérisé en ce que la plaque est chauffée en fonction de son épaisseur de 3 à 20 mm sur une période de temps de 1 à 10 minutes.

5. Procédé selon la revendication 3, caractérisé en ce que l'on chauffe plus fortement la face de la plaque qui forme la zone de déformation interne courbe.

6. Procédé selon la revendication 1, caractérisé en ce que la plaque est post-durcie en combinaison avec un plastifiant sélectionné dans le groupe des glycols monomères et oligomères.

7. Procédé selon la revendication 6, caractérisé en ce qu'on post-durcit avec du diéthylèneglycol à une température de 120 à 160°C.

8. Procédé selon la revendication 7, caractérisé en ce que la plaque est immergée dans un bain de diéthylèneglycol pour le post-durcissement.

9. Procédé selon la revendication 7, caractérisé en ce que la plaque est soumise à une atmosphère de diéthylèneglycol saturée en vapeur pendant une période de 10 à 45 minutes au cours du post-durcissement.

10. Procédé selon la revendication 1, caractérisé en ce que la plaque est fixée, une fois terminée la déformation, dans le gabarit au cours du post-durcissement.
